# EUROPEAN PATENT SPECIFICATION

(11) **EP 2 641 674 B1**
(45) Date of publication and mention of the grant of the patent: **07.06.2017**
(21) Application number: 13160564.4
(22) Date of filing: 22.03.2013
(51) Int. Cl.: B22C 9/02, B22C 9/10, B29C 67/00

(54) **A method for forming foundry moulds and/or cores and mould and/or core made with such a method**
Verfahren zum Formen von Gussformen und/oder -kernen und mit diesem Verfahren hergestellte Form und/oder Kern
Procédé de formation de moules et/ou de noyaux de fonderie et moule et/ou noyau fabriqué avec un tel procédé

(30) Priority: 23.03.2012 IT VI20120066
(43) Date of publication of application: 25.09.2013
(73) Proprietor: IN TECHNOLOGY S.r.l., 20137 Milano (IT)
(72) Inventor: MARCHETTO, Attilio, 36053 Gambellara (VI) (IT)
(74) Representative: Contadin, Giorgio

(56) References cited:
- EP-A1- 0 941 784
- EP-A1- 1 358 855
- EP-A1- 2 022 622
- WO-A1-01/89738
- DE-A1- 19 507 881
- DE-C1- 4 440 397
- GB-A- 2 458 745
- RONG CHENG ET AL: "The Optimization Design Study of Selective Laser Sintering Process Parameters on the Pro-Coated Sand Mold", APPLIED MECHANICS AND MATERIALS, TRANS TECH PUBL, CH, vol. 55-57, 1 May 2011 (2011-05-01), pages 853-858, XP009163867, ISSN: 1660-9336
- ZITIAN FAN, NAIYU HUANG, YAN LI, ZHILI LIU: "Investigation on casting mold (or core) making with coated sand by the selected laser sintering", CHINA FOUNDARY, vol. 1, no. 2, November 2004 (2004-11), pages 122-126, XP002685544,
- G. CASALINO, L.A.C. DE FILIPPIS, A.D. LUDOVICO, L. TRICARICO: "An investigation of rapid prototyping of sand casting molds by selective laser sintering", JOURNAL OF LASER APPLICATIONS, vol. 14, no. 2, May 2002 (2002-05), pages 100-106, XP002685545,

## Description

### Field of invention

The present invention can be generally applied to the technical field of foundry and specifically it has as object a method for forming foundry moulds and cores, in particular for rapid prototyping of metallic alloys castings and similar materials.

### State of the art

As known, rapid prototyping is a technology used in foundry to produce metallic alloys castings or similar in particular rapid way through the use of lost foundry cores inserted into the foundry moulds or sands. In this respect, see for example a prior art non-patent literature published by RONG CHENG et al in "APPLIED MECHANICS AND MATERIALS, TRANS TECH, PUBL, CH Vol. 55-57", having title "The optimization design study of selective laser sintering process parameters on the pre-coated sand mold" as well as prior art patent document published WO01/89738 A1.

In a specific embodiment, rapid prototyping provides production of cores and moulds through fusion and/or polymerization of a plurality of superimposed layers of a base compound of sand mixed with proper resins, each of which presents a thickness of some tens of millimeter.

Each single layer is solidified through the controlled application of a laser beam suitable to produce a localized temperature higher than that one of fusion and/or polymerization of the resinous part of the compound.

The high temperature developed by the laser beam will allow the fused and/or polymerized zones of each layer to fuse with the layers below thus originating a foundry mould or core of high precision.

One of the main problem in the production of the cores is represented by the necessity that the polymerized compound layers are adequately supported by the lower layers.

For such a reason the traditional techniques do not allow production of moulds and/or cores having projecting or cantilevered zones.

To overcome this limitation solutions have been suggested which provide, together with the formation of the core or mould, production of a removable supporting structure intended to support the load of the mould or core, particularly at the heavier or protruding zones.

The removable supporting structure generally comprises a plurality of vertical bearing elements having an end joined to the lower surface of the mould and/or core to be obtained and intended to be completely removed after formation of the mould and/or core, before the casting.

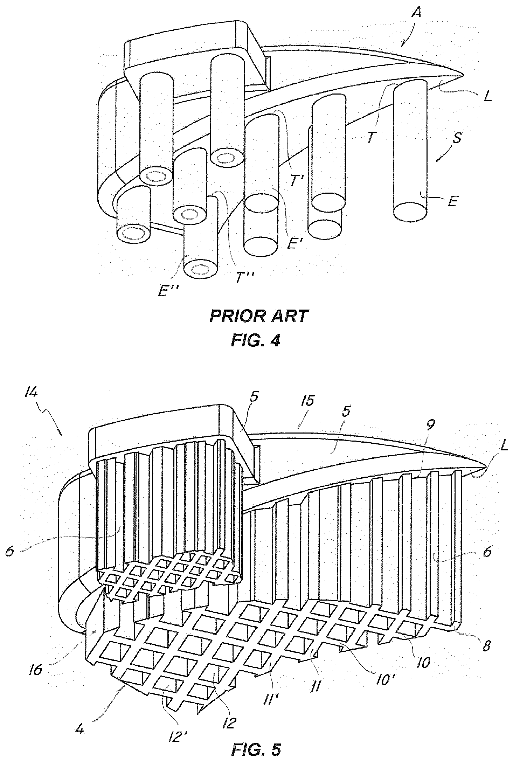

In figure 4 a core A for foundry castings produced with a rapid prototyping process of know type is shown, comprising a removable supporting structure S formed by substantially cylindrical and tubular vertical elements E, E', E", ... joined to the lower surface L of the core A at their upper end T, T', T", ....

In general, to favour removal of the supporting structure S by an operator, the vertical elements E, E', E", ... present mechanical features which differ from those ones of the core A. In particular, by varying the working parameters of the laser beam it is possible to produce vertical elements E, E', E", ... with a mechanical strength lower than the mechanical strength of the core A in such a way as to allow its removal in relatively easy manner avoiding damage of the lower surface L of the core A.

A first drawback of such a solution is represented by the fact that a supporting structure formed by a plurality of vertical bearing elements distinct and space apart each other considerably increases production times of the core and/or mould.

Indeed, each vertical element presents a relatively wide section such that to require a not negligible time of operation of the laser beam for its complete production.

A further drawback of such a solution is due to the fact that the contact surface between the single vertical element and the lower surface of the mould and/or core is relatively spread and this increases the risk of causing damages or scratches on the lower surface of the core and/or mould during removal of the supporting structure.

Yet, a further drawback of such a solution is represented by the fact that removal of the supporting structure comprising vertical elements distinct and space apart each other is relatively difficult and requires particularly energetic action by an operator.

### Summary of the invention

Main purpose of the present invention is to overcome the above discovered drawbacks, by providing a method for forming foundry moulds and/or cores which has features of high efficiency and relative inexpensiveness.

A specific purpose of the present invention is to give available a method for forming foundry moulds or cores which allows to produce moulds and/or cores in relatively short time.

A further purpose of the current invention is to provide a method for forming foundry moulds or cores which allows to separate in particularly secure way the mould and/or core from the supporting structure.

A further purpose of the present invention is to provide a method for forming foundry moulds or cores which allows to remove the supporting structure from the mould and/or core in particularly short time and with a relative tricky action by an user

These purposes, as well as other ones which will appear more clearly in the following, are achieved by a method for forming foundry moulds and/or cores for rapid prototyping of metallic alloy castings, according to claim 1 attached, as hereinafter referred for brevity sake. The method is characterized by comprising a step of adjusting one or more of said working parameters of the laser beam in such a manner that said supporting structure is tridimensionally and reticularly shaped.

The method described with the aforesaid steps allows to form foundry moulds and/or cores in particularly rapid way and allows to get supporting structure of reticular shape suitable to be removed from the mould and/or core without causing interferences with the lower surfaces itself.

Advantageous embodiments of the invention are obtained according to the dependent claims.

### Brief description of the drawings

Further features and advantages of the invention will appear more evident at the light of the detailed description of some embodiments of a foundry core, illustrated by way of not limitative example with the aid of the accompanying drawings, in which:

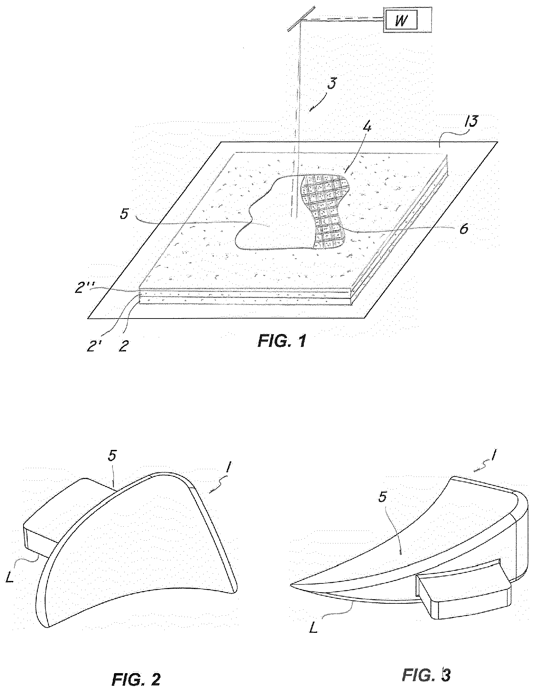

- figure 1 is a schematic view of a forming of a mould and/or core according to the invention by applying a laser beam;
- figure 2 and 3 are assonometric views of a foundry core deprive of supporting structure;
- figure 4 is a side view of the core of figure 2 comprising a supporting structure produced according to the known technique;
- figure 5 is a side view of the core of figure 3 comprising a supporting structure produced according to the method of the invention;
- figure 6 is a side view of figure 5;
- figure 7 is a section view of figure 6 according to the cutting plane VII-VII;

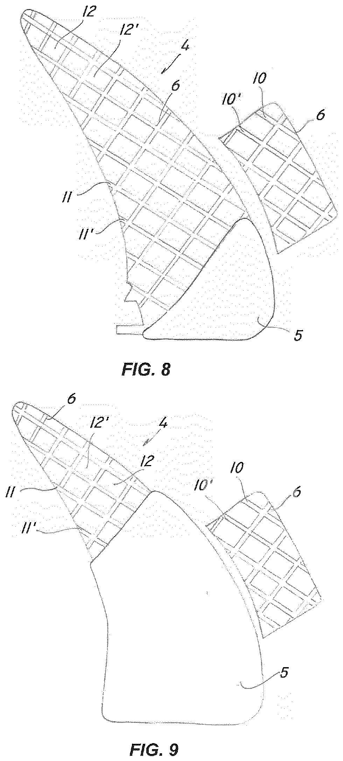

- figure 8 is a section view of figure 6 according to the cutting plane VIII-VIII;
- figure 9 is a section view of figure 6 according to the cutting plane IX-IX;
- figure 10 is a section view of figure 6 according to the cutting plane X-X;
- figure 11 is a block diagram of implementation of the method according to the invention.

### Detailed description of a preferred embodiment

With reference to cited figures, a method for forming foundry moulds and/or cores according to the invention is shown, wherein a core and/or mould is formed starting from a granular compound comprising a pre-coated sand, in particular of siliceous type or of synthetic type and could be pre-coated with a partly polymerized and lubricated phenolic resin.

In particular, the figures illustrate a sequence of production of a core 1 produced with the method according to invention and intended to be used in rapid prototyping workings of metallic alloys castings such as, for instance, aluminium alloys, steel, cast iron, bronze, titanium.

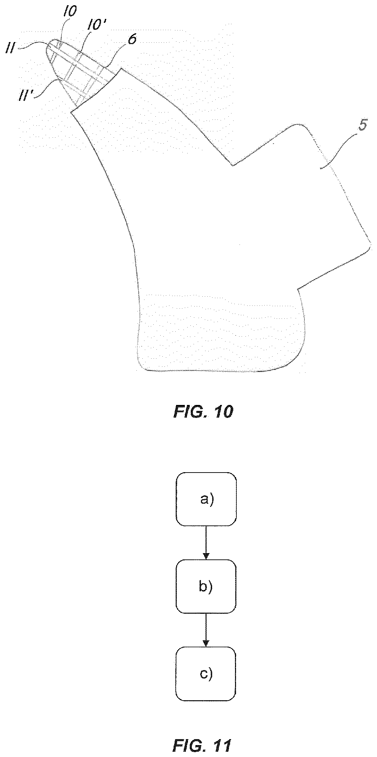

The method according to the invention, schematized in figure 11, basically comprises a step a) of sequential and controlled deposition of a plurality of superimposed layers 2, 2', ... of granular compound comprising pre-coated sand, a step b) of localized application on each of the layers 2, 2', ... of a laser beam 3 with predetermined working parameters for at least partly fusing and/or polymerizing the compound causing its adhesion to the underlying layer 2, 2', ... and realize a supporting structure 4 and a step c) of adjusting one or more of the working parameters W of the laser beam 3 in such a manner that the supporting structure 4 has a tridimensional and reticular shape.

Particularly, the working parameters W will be adjusted in order to provide a supporting structure 4 suitable to be removed at the end of the forming and before the use of the moulds and/or cores 1.

The reticular configuration of the supporting structure 4 will allow to support the load of the mould and/or core 1 in substantially uniform way further reducing times necessary to perform step b) of application of the laser beam 3.

Appropriately, the working parameters W of the laser beam 3 could be adjusted in such a way as to obtain on the superimposed layers 2, 2', ... first fused and/or polymerized areas 5 having relatively high mechanical features suitable to define the core 1 and second fused and/or polymerized areas 6 having low mechanical features suitable to define the supporting structure 4.

For instance, the working parameters W could be adjusted in such a way as to get a supporting structure 4 with resilience lower than the resilience of the first areas 5.

In this way, a supporting structure 4 of reticular shape with differentiate mechanical features could be easily removed by an operator relatively securely without generating scratches or damages on the first area 5 of the layers 2, 2', ... defining the mould and/or core 1.

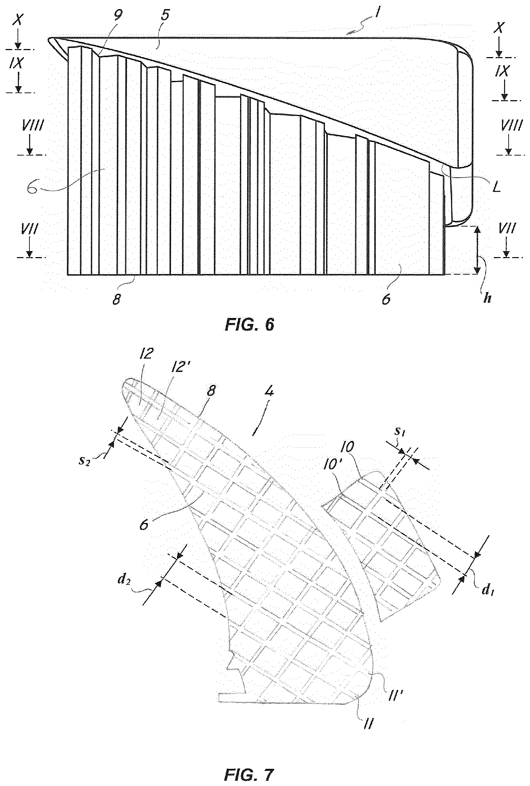

Properly, as better shown in figure 7, the supporting structure 4 could mainly extend inside the volume delimited by vertical projection of the core 1 on substantially horizontal plane. The supporting structure 4 could comprises a lower surface 8 intended to interfere with a support plane and an upper surface 9 intended to at least partly contact the lower outer surface L of the mould and/or core 1.

Adequately, as shown in figures 6 and 7, the working parameters W of the laser beam 3 could be adjusted so as to form layers 2, 2' provided exclusively of second areas 6 with reduced mechanical features suitable to define the supporting structure 4, further layers 2, 2', ... comprising both first areas 5 and second areas 6 and finally layers 2, 2', ... comprising only first areas 5, depending on the specific geometry of the core 1 to be produced.

The reticular supporting structure 4 thus obtained could be configured to keep the first areas 5 defining the mould and/or core 1 at a minimum predefine height h from the support plane. Formation of the supporting structure 4 which allows to keep lifted the mould and/or core 1 with respect to a support plane will ease manipulation of the same by an operator.

Suitably, the supporting structure 4 could comprise a plurality of first ribs 10, 10', ... of fused and/or polymerized compound mutually parallel and offset by a first predetermined distance d₁.

Moreover, the supporting structure 4 could comprise a plurality of second ribs 11, 11', ... of fused and/or polymerized compound transverse to the first ribs 10, 10', ... mutually parallel and offset by a second predetermined distance d₂.

Properly, supporting structure 4 could comprise a plurality of cavities 12, 12', ... delimited by the first 10, 10', ... and second ribs 11, 11', ... and having substantially polygonal section. In substance, the cavities 12 will correspond to the areas of the layers 2, 2', ... not interested by the laser beam and in which consequently the compound does not undergo fusion but will remain in its natural shape.

In this way, at the end of the step of forming of the core 1 and subsequently to its removal from the working plane 13 on which the superimposed layers 2, 2', ... have been deposited, the granular compound not thermally treated could escape downwardly from the reticular structure 4, so that to free the cavities 12.

Moreover, by varying the first d₁ and second distance d₂ of the respective first 10, 10', ... and second ribs 11, 11', ... it will be possible to get supporting structure 4 having cavities 12 of differentiate dimensions.

Indeed, as better shown in the figures from 5 to 10, at the relatively light first areas 5, the distance d₁, d₂ could be relatively high in such a way as to define relatively wide cavities 12, 12', ....

Vice versa, at relatively heavy first areas 5, the distance d₁, d₂ could be reduced in such a way as to define cavities 12, 12', ... of particular narrow dimensions.

Furthermore, according to a configuration illustrated in the figures, the second ribs 11, 11', ... could be substantially orthogonal to the first ribs 10, 10', ....

Suitably, the first distance d₁ and second distance d₂ could be constant and equal each other and could define cavities 12, 12', ... having substantially square and equal each other respective transverse sections

Such a configuration will allow to form a particularly efficient reticular supporting structure 4 which allows to quick overall time of implementation of the step b) of application of the laser beam 3.

Indeed, in order to get supporting structures 4 suitable to support different loads of the first areas 5 defining the mould and/or core 1 it will be sufficient to vary the value of the first distance d₁ and second distance d₂ depending on the portion of mould and/or core 1 which is being to form.

Suitably, the first distance d₁ and second distance d₂ could present values included between 5 mm and 20 mm and preferably close to 13 mm.

Moreover, the first ribs 10, 10', ... and second ribs 11, 11', ... could present a thickness s₁, s₂ included between 1 mm and 5 mm and preferably close to 3 mm.

The thickness s₁, s₂ of the first 10, 10', ... and second ribs 11, 11', ... could be determined in such a way as to allow the reticular supporting structure 4 to support the load of the mould and/or core 1 and, at the same time, to minimize implementation time of the step b) of application of the laser beam 3 on each superimposed layer 2, 2', ... of compound.

A particularly efficient configuration of the reticular supporting structure 4 provides a thickness s₁, s₂ of the first 10, 10', ... and second ribs 11, 11', ... equal to 3 mm and a first d₁ and second distance d₂ equal to 13 mm.

Properly, the working parameters W could be selected between the emission power of the laser beam and its scanning speed on each of the superimposed layers 2, 2', ... of compound. In this manner, variation of one or more of these working parameters W will allow to generate a different fusion and/or polymerization temperature of the compound in the first 5 and second areas 6 of the superimposed layers 2, 2', ....

Suitably, for each layer 2, 2', ... of compound the emission power of the laser beam 3 at the first areas 5 could be lower than the emission power at the second areas 6 and the scanning speed of the first areas 5 could be greater than the scanning speed at the second areas 6. Furthermore, in order to form the first ribs 10, 10', ... and second ribs 11, 11', ... with particularly reduced thicknesses s₁, s₂, a laser beam 3 suitable to produce a local fusion and/or polymerization temperature of the compound considerably higher than the fusion and/or polymerization temperature of the compound of the first areas 5 intended to form the mould and/or core 1 is applied.

Increasing of the fusion and/or polymerization temperature of the compound at the second areas 6 allows to get ribs 10, 10', ...; 11, 11', ... with a particularly precise and defined profile. Specifically, the emission power of the laser beam being equal, the scanning speed of the laser beam 3 at the second areas 6 could be reduced of a percentage included between 5% and 30% with respect to the scanning speed of the first areas 5 and preferably close to 20%. In this way, the greater fusion and/or polymerization temperature of the compound at the second areas 6 could be got by varying in controlled manner only the scanning speed. Moreover, at the compound areas suitable to define the cavities 12, 12', ... of the supporting structure 4 passage of the laser beam 3 will not take place.

Thanks to this trick, implementation time of the step b) of application of the laser beam 3 could be further reduced and the reticular supporting structure 4 thus obtained could present production time considerably lower than those ones necessary to obtain a supporting structure S of know type, shown in figure 4.

Moreover, the aforesaid effects could be obtained through the simultaneous variation of the scanning speed of the laser beam 3 and emission power of the same.

Indeed, by increasing the emission power of the laser beam 3 and keeping substantially constant the scanning speed at the second areas 6 it is possible to get the maximum increase of the fusion and/or polymerization temperature of the compound.

Properly, laser 3 could be of CO₂ type with maximum power included in a range between 100W and 1,000W.

The width of the laser beam 3 could be of about 0.2 mm and the moving speed of the same could be included between 100 m/s and 10,000 m/s.

It is provided a foundry mould and/or core 1, shown in figure 5, which can be used for rapid prototyping of metallic alloys castings formed through the aforesaid method starting from a granular compound comprising a pre-coated sand.

The mould and/or core 1 comprises a first portion 15 with relatively high mechanical features adapted to be placed into contact with a casting and a second portion 16 with relatively reduced mechanical features adapted to define a supporting structure 4 for the first portion 15 during formation thereof.

Moreover, the supporting structure 4 is adapted to be removed at the end of the formation and before using said first portion 15.

According to a peculiar feature of the invention, the supporting structure 4 has a tridimensional reticular shape.

Appropriately, the granular compound could comprise siliceous sands with granulometry index preferably included between 80 AFA and 140 AFA with a tolerance of about ±5 AFA. Siliceous sand could be pre-coated with a phenolic or similar resin and the weight of the resinous part could be included between 1% and 5% of the overall weight of the sand.

Use of siliceous sands will allow to produce a compound particularly suitable to form foundry moulds and/or cores 14 for castings with maximum fusion temperature close to 1,800°C and an use temperature included between about 250°C and about 350°C.

Hot bending strength of the final mass will be close to 700 N/cm² with tolerance di ±80 N/cm², cold bending strength close to 1,100 N/cm² and tolerance di ±120 N/cm² and calcination loss of 3.5% with tolerance of ±0.2%.

Alternatively, the compound could comprise a synthetic sand, for example of the cerabit® or similar type, with granulometry index preferably included between 60 AFA and 120 AFA with a tolerance of about ±5 AFA.

Even the synthetic sand could be pre-coated with a phenolic or similar resin whose weight could be included between 2% and 5% of the overall weight.

Use of an inert component selected from the group of the synthetic sands will allow to produce a compound suitable to produce foundry cores 14 for cast iron castings of limited section or for aluminium, steel or its alloy castings.

In this case, use temperature will be included between about 50°C and about 100°C, hot bending strength close to 360 N/cm² with tolerance di ±50 N/cm², cold bending strength close to 600 N/cm² with tolerance di ±80 N/cm² and calcination loss included between 2.4% and 2.8% with tolerance of ±0.1%.

It has been verified that the mould and/or core 14 obtained starting from granular compounds containing pre-coated sands will present a hot bending strength not lower than 350 N/cm² with a tolerance of about ±50 N/cm² and a cold bending strength not lower than 550 N/cm² with a tolerance of about ± 80 N/cm².

Furthermore, loss by calcination of the core 14, intended as difference between the total weight of the compound before and after introduction of the alloy casting, will be lower than 3,5% with a tolerance of ±0.2%.

From what previously described, it appears evident that the present method allows to produce particularly efficient and rapid to be formed foundry moulds and/or cores with supporting structure.

The method and mould and/or core formed according to the invention are suitable to several modifications and variants all falling within the inventive concept provided by the appended claims. All the particulars could be replaced by other ones technically equivalent, and the materials could be different according to the needs, without departing from the scope of the invention.

For example, alternative to the reticular pattern, the supporting structure 4 could be also constituted by a bearing portion provided with openings or lightenings suitable to satisfy the requirements of strength but always resulting light.

Even if the method and mould and/or core have been described with particular reference to the appended figures, the reference numbers used in the description and claims are utilized to improve the intelligibility of the invention and do not anyway limit the claimed scope of protection.

## Claims

1. Method for forming foundry moulds and/or cores (1) suitable for use in rapid prototyping of metallic alloys castings, comprising a step a) of sequential and controlled deposition of a plurality of superimposed layers (2, 2', ...) of a granular compound comprising a pre-coated sand, a step b) of localized application on each of said layers (2, 2', ...) of a laser beam (3) with predetermined working parameters (W) for at least partly fusing and/or polymerizing said compound producing its adhesion to the underlying layer (2, 2', ...), in such a way as to realize said moulds and/or said cores (1) and a supporting structure (4) of tridimensional reticular shape, with different mechanical features, for said moulds and/or said cores (1), **characterized in that** it comprises a step c) of adjusting one or more of said working parameters (W) of the laser beam (3) in order to get said tridimensional reticular shape for said supporting structure (4) and a step d) of removing said supporting structure (4) at the end of forming and before using said moulds and/or cores (1).

2. Method according to claim 1), **characterized in that** one or more working parameters (W) of the laser beam (3) are adjusted to realize one said layers (2, 2', ...) first fused and/or polymerized areas (5) having relatively high mechanical features adapted to define the mould and/or core (1) and second fused and/or polymerized areas (6) having relatively reduced mechanical features adapted to said supporting structure (4).

3. Method according to claim 2), **characterized in that** said working parameters (W) are adjusted in such a way as to get said supporting structure (4) with resilience lower than the resilience of said first areas (5) defining said mould and/or said core (1).

4. Method according to claim 1) or 2), **characterized in that** said one or more working parameters (W) are selected between the emission power of said laser beam (3) and its scanning speed on each of said superimposed layers (2, 2', ...) of compound.

5. Method according to claim 4), **characterized in that** for each of said layers (2, 2', ...) said emission power at said first areas (5) is lower than the emission power of the laser beam (3) at said second areas (6) and/or said scanning speed at said first area (5) is greater than the scanning speed at said second areas (6).

6. Method according to claim 4) or 5), **characterized in that** said scanning speed of the laser beam (3) at said second areas (6) is reduced of a value between 5% and 30% with respect to the scanning speed of the laser beam (3) at said first areas (5) and preferably close to 20%.

7. Method according to any of the preceding claims, **characterized in that** said reticular supporting structure (4) comprises a plurality of first ribs (10, 10', ...) of fused and/or polymerized compound reciprocally parallel and offset by a first predetermined regular distance (d₁) and a plurality of second ribs (11, 11', ...) of fused and/or polymerized compounds transverse to said first ribs (10, 10', ...), said second ribs (11, 11', ...) being parallel and offset by a second predetermined distance (d₂).

8. Method according to claim 7), **characterized in that** said second ribs (11, 11', ...) are substantially orthogonal to said first ribs (10, 10', ...).

9. Method according to claim 7) or 8), **characterized in that** said predetermined first (d₁) and second distance (d₂) are constant and equal each other and have values comprised between 5 mm and 15 mm an preferably close to 10 mm.

10. Method according to any of the claims 7) to 9) **characterized in that** said first ribs (10, 10', ...) and said second ribs (11, 11', ...) have a thickness (s₁, s₂) equal to each other and comprised between 1 mm and 5 mm and preferably close to 3 mm.

11. Method according to claim 10) **characterized in that** in order to form said first ribs (10, 10', ...) and said second ribs (11, 11', ...) with particularly reduced thicknesses (s₁, s₂), said laser beam (3) is applied in such a way as to produce a local fusion and/or polymerization temperature of said granular compound higher than the fusion and/or polymerization temperature of said granular compound of said first areas (5) intended to form said mould and/or said core (1).

## Patentansprüche

1. Verfahren zum Ausbilden von Gussformen und/oder - kernen (1), die zum Gebrauch beim raschen Erstellen von Prototypen von metallischen Gusstücken geeignet sind, umfassend einen Schritt a) der sequentiellen und gesteuerten Ablagerung von mehreren überlagerten Schichten (2, 2', ...) einer körnigen Mischung, die vorbeschichteten Sand umfasst, einen Schritt b) der lokalisierten Anwendung auf jede der Schichtern (2, 2' , ...) eines Laserstrahls (3) mit vorgegebenen Arbeitsparametern (W) zum zumindest teilweise Schmelzen und/oder Polymerisieren der Mischung, wodurch ihre Anhaftung an die unterliegende Schicht (2, 2', ...) erzeugt wird, sodass die Formen und/oder Kerne (1) und eine Stützstruktur (4) mit dreidimensionaler netzartiger Form mit verschiedenen mechanischen Merkmalen für die Formen und/oder Kerne (1) verwirklicht werden, **dadurch gekennzeichnet, dass** es einen Schritt c) des Anpassens von einem oder mehr der Arbeitsparameter (W) des Laserstrahls (3) zum Erhalten der dreidimensionalen netzartigen Form für die Stützstruktur (4) und einen Schritt d) des Entfernens der Stützstruktur (4) am Ende des Ausbildens und vor dem Benutzen der Formen und/oder Kerne (1) umfasst.

2. Verfahren nach Anspruch 1, **dadurch gekennzeichnet, dass** der eine oder mehr Arbeitsparameter (W) des Laserstrahls (3) zum Verwirklichen auf den Schichten (2, 2', ...) von ersten geschmolzenen und/oder polymerisierten Bereichen (5) mit verhältnismäßig hohen mechanischen Merkmalen, die zum Definieren der Form und/oder des Kerns (1) geeignet sind, und von zweiten geschmolzenen und/oder polymerisierten Bereichen (6) mit verhältnismäßig reduzierten mechanischen Merkmalen, die zum Definieren der Stützstruktur (4) geeignet sind, angepasst werden.

3. Verfahren nach Anspruch 2, **dadurch gekennzeichnet, dass** die Arbeitsparameter (W) derart angepasst werden, dass die Stützstruktur (4) mit einer Elastizität erhalten wird, die niedriger als die Elastizität der ersten Bereiche (5) ist, welche die Form und/oder den Kern (1) definieren.

4. Verfahren nach einem der Ansprüche 1 oder 2, **dadurch gekennzeichnet, dass** ein oder mehr Arbeitsparameter (W) zwischen der Emissionsleistung des Laserstrahls (3) und seiner Abtastgeschwindigkeit auf jeder der überlagerten Schichten (2, 2', ...) der Mischung ausgewählt werden.

5. Verfahren nach Anspruch 4, **dadurch gekennzeichnet, dass** für jede der Schichten (2, 2' , ...) die Emissionsleistung an den ersten Bereichen (5) niedriger als die Emissionsleistung des Laserstrahls (3) an den zweiten Bereichen (6) ist und/oder die Abtastgeschwindigkeit am ersten Bereich (5) größer als die Abtastgeschwindigkeit an den zweiten Bereichen (6) ist.

6. Verfahren nach einem der Ansprüche 4 oder 5, **dadurch gekennzeichnet, dass** die Abtastgeschwindigkeit des Laserstrahls (3) an den zweiten Bereichen (6) um einen Wert zwischen 5% und 30% bezüglich der Abtastgeschwindigkeit des Laserstrahls (3) an den ersten Bereichen (5) und vorzugsweise nahezu 20% verringert wird.

7. Verfahren nach einem der vorhergehenden Ansprüche, **dadurch gekennzeichnet, dass** die netzartige Stützstruktur (4) mehrere erste Rippen (10, 10' , ...) aus geschmolzener und/oder polymerisierter Mischung wechselseitig parallel und versetzt um einen ersten vorgegebenen regelmäßigen Abstand (d₁) und mehrere zweite Rippen (11, 11' , ...) aus geschmolzenen und/oder polymerisierten Mischungen quer zu den ersten Rippen (10, 10', ...) verlaufend umfasst, wobei die zweiten Rippen (11, 11', ...) parallel und um einen zweiten vorgegebenen Abstand (d₂) versetzt sind.

8. Verfahren nach Anspruch 7, **dadurch gekennzeichnet, dass** die zweiten Rippen (11, 11', ...) im Wesentlichen orthogonal zu den ersten Rippen (10, 10', ...) stehen.

9. Verfahren nach einem der Ansprüche 7 oder 8, **dadurch gekennzeichnet, dass** der vorgegebene erste (d1) und zweite Abstand (d2) konstant und einander gleich sind und Werte aufweisen, die zwischen 5 mm und 15 mm, vorzugsweise nahezu 10 mm umfassen.

10. Verfahren nach einem der Ansprüche 7 bis 9, **dadurch gekennzeichnet, dass** die ersten Rippen (10, 10', ...) und die zweiten Rippen (11, 11' , ...) eine Stärke (s₁, s₂) aufweisen, die einander gleich ist, und zwischen 1 mm und 5 mm und vorzugsweise nahezu 3 mm umfasst.

11. Verfahren nach Anspruch 10, **dadurch gekennzeichnet, dass** zum Ausbilden der ersten Rippen (10, 10', ...) und der zweiten Rippen (11, 11', ...) mit insbesondere reduzierten Stärken (s₁, s₂) der Laserstrahl (3) derart angewendet wird, dass er eine lokale Schmelz- und/oder Polymerisationstemperatur der körnigen Mischung erzeugt, die höher als die Schmelz- und/oder Polymerisationstemperatur der körnigen Mischung der ersten Bereiche (5) ist, welche zum Ausbilden der Form und/oder des Kerns (1) ausgelegt sind.

## Revendications

1. Procédé pour former des moules et/ou noyaux de fonderie (1) appropriés pour être utilisés dans le prototypage rapide de pièces coulées d'alliages métalliques, comprenant une étape a) de dépôt séquentiel et contrôlé d'une pluralité de couches superposées (2, 2' , ...) d'un composé granulaire comprenant du sable pré-enrobé, une étape b) d'application localisée sur chacune desdites couches (2, 2', ...) d'un faisceau laser (3) avec des paramètres de travail prédéterminés (W) pour au moins partiellement fondre et/ou polymériser ledit composé produisant son adhésion à la couche sous-jacente (2, 2',...), de manière à réaliser lesdits moules et/ou lesdits noyaux (1) et une structure de support (4) de forme réticulaire tridimensionnelle, avec différentes caractéristiques mécaniques, pour lesdits moules et/ou lesdits noyaux (1), **caractérisé par le fait qu'**il comprend une étape c) d'ajustement d'un ou plusieurs desdits paramètres de travail (W) du faisceau laser (3) afin d'obtenir ladite forme réticulaire tridimensionnelle pour ladite structure de support (4) et une étape d) de retrait de ladite structure de support (4) à la fin du formage et avant l'utilisation desdits moules et/ou noyaux (1).

2. Procédé selon la revendication 1, **caractérisé par le fait qu'**un ou plusieurs paramètres de travail (W) du faisceau laser (3) sont ajustés pour réaliser sur lesdites couches (2, 2', ...), des premières zones fondues et/ou polymérisées (5) ayant des caractéristiques mécaniques relativement élevées adaptées pour définir le moule et/ou noyau (1) et des secondes zones fondues et/ou polymérisées (6) ayant des caractéristiques mécaniques relativement réduites adaptées pour ladite structure de support (4).

3. Procédé selon la revendication 2, **caractérisé par le fait que** lesdits paramètres de travail (W) sont ajustés de manière à obtenir ladite structure de support (4) avec une résilience inférieure à la résilience desdites premières zones (5) définissant ledit moule et/ou ledit noyau (1).

4. Procédé selon la revendication 1 ou 2, **caractérisé par le fait qu'**un ou plusieurs paramètres de travail (W) précités sont choisis parmi la puissance d'émission dudit faisceau laser (3) et sa vitesse de balayage sur chacune desdites couches superposées (2, 2', ...) de composé.

5. Procédé selon la revendication 4, **caractérisé par le fait que** pour chacune desdites couches (2, 2', ...) ladite puissance d'émission au niveau desdites premières zones (5) est inférieure à la puissance d'émission du faisceau laser (3) au niveau desdites secondes zones (6) et/ou ladite vitesse de balayage au niveau desdites premières zones (5) est supérieure à la vitesse de balayage au niveau desdites secondes zones (6).

6. Procédé selon la revendication 4 ou 5, **caractérisé par le fait que** ladite vitesse de balayage du faisceau laser (3) au niveau desdites secondes zones (6) est réduite d'une valeur entre 5 % et 30 % par rapport à la vitesse de balayage du faisceau laser (3) au niveau desdites premières zones (5) et de préférence proche de 20 %.

7. Procédé selon l'une quelconque des revendications précédentes, **caractérisé par le fait que** ladite structure de support réticulaire (4) comprend une pluralité de premières nervures (10, 10', ...) de composé fondu et/ou polymérisé parallèles les unes aux autres et décalées d'une première distance régulière prédéterminée (d1) et une pluralité de secondes nervures (11, 11', ...) de composés fondus et/ou polymérisés transversales auxdites premières nervures (10, 10',...), lesdites secondes nervures (11, 11',...) étant parallèles et décalées d'une seconde distance prédéterminée (d2).

8. Procédé selon la revendication 7, **caractérisé par le fait que** lesdites secondes nervures (11, 11', ...) sont sensiblement orthogonales auxdites premières nervures (10, 10', ...).

9. Procédé selon la revendication 7 ou 8, **caractérisé par le fait que** lesdites première (d1) et seconde (d2) distances prédéterminées sont constantes et égales l'une à l'autre et ont des valeurs comprises entre 5 mm et 15 mm, et de préférence proche de 10 mm.

10. Procédé selon l'une quelconque des revendications 7 à 9, **caractérisé par le fait que** lesdites premières nervures (10, 10', ...) et lesdites secondes nervures (11, 11' , ...) ont une épaisseur (s₁, s₂) égale l'une à l'autre et comprise entre 1 mm et 5 mm, et de préférence proche de 3 mm.

11. Procédé selon la revendication 10, **caractérisé par le fait qu'**afin de former lesdites premières nervures (10, 10', ...) et lesdites secondes nervures (11, 11', ...) avec des épaisseurs particulièrement réduites (s₁, s₂), ledit faisceau laser (3) est appliqué de manière à produire une température de fusion et/ou polymérisation locale dudit composé granulaire supérieure à la température de fusion et/ou polymérisation dudit composé granulaire desdites premières zones (5) destinées à former ledit moule et/ou ledit noyau (1).
